(19) Europäisches Patentamt / European Patent Office / Office européen des brevets

(11) **EP 4 227 114 B1**

(12) **EUROPEAN PATENT SPECIFICATION**

(45) Date of publication and mention
of the grant of the patent:
**25.06.2025 Bulletin 2025/26**

(21) Application number: **23151230.2**

(22) Date of filing: **12.01.2023**

(51) International Patent Classification (IPC):
**B60C 9/22** *(2006.01)* **B60C 9/20** *(2006.01)*
**B60C 11/00** *(2006.01)* **B60C 11/03** *(2006.01)*

(52) Cooperative Patent Classification (CPC):
**B60C 9/2204; B60C 9/2006; B60C 11/0083;
B60C 11/0332;** B60C 2009/2219; B60C 2200/06;
Y02T 10/86

(54) **HEAVY DUTY TIRE**

SCHWERLASTREIFEN

PNEU POUR POIDS LOURDS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **09.02.2022 JP 2022018661**

(43) Date of publication of application:
**16.08.2023 Bulletin 2023/33**

(73) Proprietor: **Sumitomo Rubber Industries, Ltd.
Kobe-shi, Hyogo 651-0072 (JP)**

(72) Inventor: **ITO, Shuhei
Kobe-shi, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 3 800 069       JP-A- 2007 176 438
US-A- 6 082 424       US-B2- 9 987 883**

**Description**

BACKGROUND OF THE INVENTION

Field of the Invention

The present invention relates to a heavy duty tire.

Background Art

The tread portion of a tire is reinforced by providing a belt and a band between a tread and a carcass. The belt includes a large number of belt cords aligned with each other. The band includes a helically wound band cord. In a heavy duty tire, cords made of metal such as steel cords are used as belt cords and a band cord. By adjusting the configuration of the belt or the band, the stiffness of the tread portion is controlled (for example, Japanese Laid-Open Patent Publication No. H9-105084).

In order to increase a carrying capacity and improve transportation efficiency, transportation vehicles such as trucks and trailers have decreased floor heights. Accordingly, heavy duty tires have lower flatness.

For a low-flatness tire, the volume of air with which the interior of the tire is filled is smaller than that for a high-flatness tire. The used internal pressure and the load capacity of the low-flatness tire are the same as those of the high-flatness tire. In the low-flatness tire, the internal pressure distributed to the tread is increased as compared to that in the high-flatness tire. Therefore, a dimensional change of the low-flatness tire due to running tends to increase. The dimensional change leads to a change of a ground-contact shape. The change of the ground-contact shape promotes occurrence of uneven wear. In order to hold the tread portion and suppress a dimensional change, for example, use of a full band is considered.

On the tread, a plurality of circumferential grooves are formed so as to be aligned in the axial direction. The stiffness of a portion where the circumferential grooves are located is low. Each of shoulder land portions including ends of a tread surface moves more easily than a land portion located axially inward of the shoulder land portion. Therefore, a shoulder circumferential groove that demarcates the shoulder land portion opens more easily than the other circumferential grooves. A dimensional change at a shoulder portion from the shoulder circumferential groove to the shoulder land portion is large. In the low-flatness tire in which a partial pressure at an inner end of the tread portion is large, it is difficult to suppress the dimensional change only by a full band.

Due to the structure of the tire, it is not possible to place a full band to a portion at each end of the tread surface. The portion at each end of the tread surface moves more easily than a portion at which the full band is provided. The ground-contact length at the portion at each end of the tread surface increases. The movement of the portion at which the full band is provided is restrained by the full band. Therefore, a difference in ground-contact length is likely to occur between the portion at each end of the tread surface and the portion at which the full band is provided. If such a difference in ground-contact length occurs, the risk of occurrence of uneven wear increases. Related technologies are also known from US 9 987 883 B2 and JP 2007 176438 A.

As described above, the dimensional change at the shoulder portion from the shoulder circumferential groove to the shoulder land portion is large. Measures such as providing a full band are taken, but further reduction of the risk of occurrence of uneven wear at the shoulder land portion is desired.

The present invention has been made in view of such circumstances. An object of the present invention is to provide a heavy duty tire that can achieve improvement of uneven wear resistance.

SUMMARY OF THE INVENTION

The present invention is set out in the appended claims. A heavy duty tire according to an aspect of the present invention has a nominal aspect ratio of not greater than 70%. The tire includes: a tread; and a reinforcing portion located radially inward of the tread. A plurality of land portions demarcated by a plurality of circumferential grooves are formed in the tread, among the plurality of circumferential grooves, a circumferential groove located on each outer side in an axial direction is a shoulder circumferential groove, and among the plurality of land portions, a land portion located axially outward of the shoulder circumferential groove is a shoulder land portion. The reinforcing portion includes a belt including a large number of belt cords aligned with each other, and a band including a helically wound band cord. The band includes a full band and a pair of edge bands. Each of both ends of the full band is located axially outward of the shoulder circumferential groove. The pair of edge bands are disposed so as to be spaced apart from each other in the axial direction, and are each located radially outward of the end of the full band. The tread has a tread surface which comes into contact with a road surface. In a meridian cross-section, a contour line of the tread surface includes a first contour line including an equator, and a pair of second contour lines connected to the first contour line and each including an end of the tread surface. The first contour line is an arc, and each of the pair of second contour lines is a straight line or an arc. When each second contour line is an arc, a radius of curvature of the second contour line is different from a radius of curvature of the first contour line. In the contour line of the tread surface, a boundary between the first contour line and the second contour line is located in a portion corresponding to the shoulder circumferential groove.

In the heavy duty tire, an outer diameter of the tire at the equator is a first outer diameter D1, an outer diameter of the tire at an inner edge of the shoulder land portion is a second outer diameter D2, and an outer diameter of the tire at the end of the tread surface is a third outer diameter D3. The first outer diameter D1, the second outer diameter D2, and the third outer diameter D3 satisfy the following formulas (1) and (2),

$$D1 > D2 > D3 \qquad\qquad (1),$$

$$0.65 \leq (D2 - D3)/(D1 - D3) \leq 0.85 \qquad (2).$$

Preferably, in the heavy duty tire, each second contour line is an arc, and when a unit of the radius of curvature of the second contour line is millimeter, a curvature represented by a reciprocal of the radius of curvature is not greater than $0.002$ mm$^{-1}$.

More preferably, in the heavy duty tire, each second contour line is a straight line.

Preferably, in the heavy duty tire, in a shape of a ground-contact surface obtained when the tire is fitted on a standardized rim, an internal pressure of the tire is adjusted to a standardized internal pressure, a standardized load is applied to the tire, and the tire is brought into contact with a flat road surface, a length of the ground-contact surface at the end of the tread surface is a ground-contact length LS1, and a length of the ground-contact surface at a position corresponding to a width that is 70% of a maximum ground-contact width is a ground-contact length LS2. A ratio (LS2/LS1) of the ground-contact length LS2 to the ground-contact length LS1 is not less than 0.90 and not greater than 1.10.

More preferably, in the heavy duty tire, in the ground-contact surface, a length of the ground-contact surface at a ground-contact width center is a ground-contact length LS3, and a ratio (LS3/LS2) of the ground-contact length LS3 to the ground-contact length LS2 is not less than 0.95 and not greater than 1.20.

Preferably, in the heavy duty tire, a ratio of a width of the full band to a width of the tread surface is not less than 0.65 and not greater than 0.80.

Preferably, in the heavy duty tire, a distance in the axial direction from the end of the full band to an inner end of the edge band is not less than 8.0 mm, and a distance in the axial direction from the end of the full band to an outer end of the edge band is not less than 8.0 mm.

According to the present invention, a heavy duty tire that can achieve improvement of uneven wear resistance is obtained.

BRIEF DESCRIPTION OF THE DRAWINGS

FIG. 1 is a cross-sectional view showing a part of a heavy duty tire according to an embodiment of the present invention;
FIG. 2 is a schematic diagram illustrating the configuration of a reinforcing portion;
FIG. 3 is a cross-sectional view showing a part of the tire in FIG. 1;
FIG. 4 is a cross-sectional view illustrating a profile of a tread surface; and
FIG. 5 is a schematic diagram illustrating a ground-contact surface shape.

DETAILED DESCRIPTION

Hereinafter, the present invention will be described in detail based on preferred embodiments with appropriate reference to the drawings.

In the present disclosure, a state where a tire is fitted on a standardized rim, the internal pressure of the tire is adjusted to a standardized internal pressure, and no load is applied to the tire is referred to as a standardized state.

In the present disclosure, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cross-section of the tire obtained by cutting the tire along a plane including a rotation axis, with the distance between right and left beads being made equal to the distance between the beads in the tire that is fitted on the standardized rim.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present disclosure, the "nominal aspect ratio" is the "nominal aspect ratio" included in "tyre designation" specified in JIS D4202 "Automobile tyres-Designation and dimensions".

In the present disclosure, a tread portion of the tire is a portion of the tire that comes into contact with a road surface. A bead portion is a portion of the tire that is fitted to a rim. A side portion is a portion of the tire that extends between the tread portion and the bead portion. The tire includes a tread portion, a pair of bead portions, and a pair of side portions as portions thereof.

In the present disclosure, the number of cords included per 5 cm width of a tire element, including aligned cords, is represented as the density of cords included in this element (unit: ends/5 cm). Unless otherwise specified, the density of the cords is obtained in a cross-section of the element obtained by cutting the element along a plane perpendicular to the longitudinal direction of the cords.

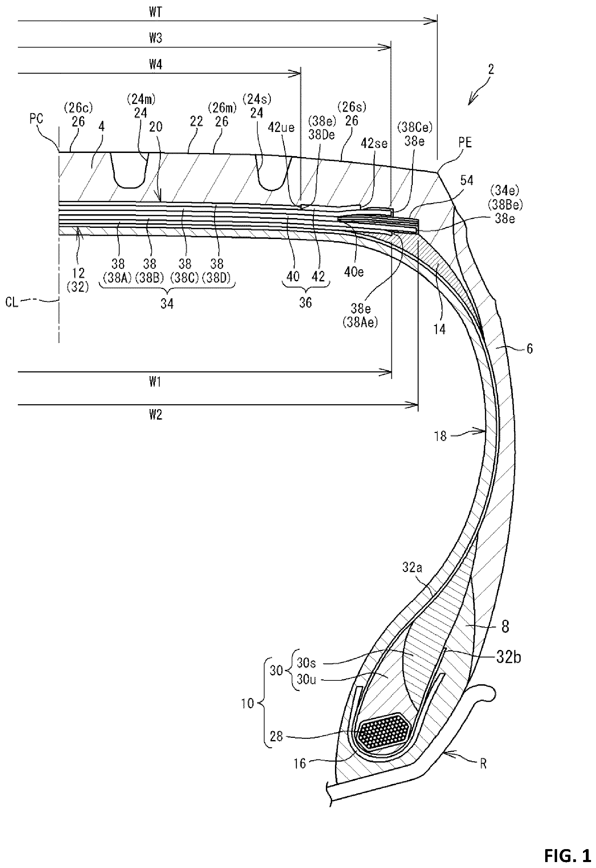

FIG. 1 shows a part of a heavy duty tire 2 (hereinafter, also referred to simply as "tire 2") according to an embodiment of the present invention. The tire 2 is mounted to a vehicle such as a truck and a bus. The nominal aspect ratio of the tire 2 is not greater than 70%. In other words, the tire 2 has a nominal aspect ratio of not greater than 70%. The tire 2 is a low-flatness tire.

FIG. 1 shows a part of a cross-section (hereinafter, also referred to as meridian cross-section) of the tire 2 along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. An alternate long and short dash line CL represents the equator plane of the tire 2.

The tire 2 is fitted on a rim R. The rim R is a standardized rim. The interior of the tire 2 is filled with air to adjust the internal pressure of the tire 2. The tire 2 fitted on the rim R is also referred to as a tire-rim assembly. The tire-rim assembly includes the rim R and the tire 2 fitted on the rim R.

The tire 2 includes a tread 4, a pair of sidewalls 6, a pair of chafers 8, a pair of beads 10, a carcass 12, a pair of cushion layers 14, a pair of steel reinforcing layers 16, an inner liner 18, and a reinforcing portion 20.

The tread 4 comes into contact with a road surface at a tread surface 22 thereof. In other words, the tread 4 has the tread surface 22 which comes into contact with a road surface. In FIG. 1, reference character PC represents the point of intersection of the tread surface 22 and the equator plane CL. The point of intersection PC is the equator of the tire 2. The equator PC is the radially outer end of the tire 2.

In FIG. 1, reference character PE represents an end of the tread surface 22. A length indicated by an arrow WT is the width of the tread surface 22. The width WT of the tread surface 22 is the distance in the axial direction from a first end PE of the tread surface 22 to a second end PE of the tread surface 22.

Although not shown, the tread 4 can include a base portion and a cap portion located radially outward of the base portion. In this case, the base portion is formed from a crosslinked rubber that has low heat generation properties. The cap portion is formed from a crosslinked rubber for which wear resistance and grip performance are taken into consideration.

On the tread 4, a plurality of circumferential grooves 24 are formed. In the tread 4, a plurality of land portions 26 demarcated by the plurality of circumferential grooves 24 are formed. In the tire 2, four circumferential grooves 24 are formed, and five land portions 26 are formed.

The four circumferential grooves 24 are aligned in the axial direction and continuously extend in the circumferential direction. Among these circumferential grooves 24, the circumferential groove 24 located on each outer side in the axial direction is a shoulder circumferential groove 24s. The circumferential grooves 24 located axially inward of the shoulder circumferential grooves 24s are middle circumferential grooves 24m. The four circumferential grooves 24 of the tire 2 include a pair of the middle circumferential grooves 24m and a pair of the shoulder circumferential grooves 24s.

In the tire 2, from the viewpoint of contribution to drainage performance and traction performance, the groove width of each middle circumferential groove 24m is preferably not less than 2% and not greater than 10% of the width WT of the tread surface 22. The groove depth of each middle circumferential groove 24m is preferably not less than 13 mm and not greater than 25 mm. The groove width of each shoulder circumferential groove 24s is preferably not less than 1% and not greater than 7% of the width WT of the tread surface 22. The groove depth of each shoulder circumferential groove 24s is preferably not less than 13 mm and not greater than 25 mm.

In the present disclosure, the groove width of each circumferential groove 24 is represented as the opening width of the circumferential groove 24 on the tread surface 22. The groove depth of each circumferential groove 24 is represented as the distance from a line segment connecting the opening edges of the circumferential groove 24 to the bottom of the circumferential groove 24.

The five land portions 26 are aligned in the axial direction and continuously extend in the circumferential direction. Among these land portions 26, the land portion 26 located on each outer side in the axial direction is a shoulder land portion 26s. Each shoulder land portion 26s is a land portion 26 located axially outward of the shoulder circumferential groove 24s. Each shoulder land portion 26s includes the end PE of the tread surface 22.

The land portions 26 located axially inward of the shoulder land portions 26s are middle land portions 26m. The land portion 26 located axially inward of the middle land portions 26m is a center land portion 26c. The five land portions 26 of the tire 2 include the center land portion 26c, a pair of the middle land portions 26m, and a pair of the shoulder land portions 26s.

In the tire 2, the width of the center land portion 26c is not less than 10% and not greater than 18% of the width WT of the tread surface 22. The width of each middle land portion 26m is not less than 10% and not greater than 18% of the width WT of the tread surface 22. The width of each shoulder land portion 26s is not less than 15% and not greater than 25% of the width WT of the tread surface 22.

In the present invention, the width of each land portion 26 is represented as the width in the axial direction of the top surface of the land portion 26 which forms a part of the tread surface 22.

In the tire 2, the land portion 26 located at the center in the axial direction among the land portions 26 formed in the tread 4, that is, the center land portion 26c, is located on the equator plane CL. The tire 2 includes the tread 4 formed such that the land portion 26 is located on the equator plane CL. The tread 4 may be formed such that the circumferential groove 24 is located on the equator plane CL.

Each sidewall 6 is connected to an end of the tread 4. The sidewall 6 extends radially inward from the end of the tread 4. The sidewall 6 is located radially inward of the tread 4. The sidewall 6 is formed from a crosslinked rubber for which cut resistance is taken into consideration.

Each chafer 8 is located radially inward of the sidewall 6. The chafer 8 comes into contact with the rim R. The chafer 8 is formed from a crosslinked rubber for which wear resistance is taken into consideration.

Each bead 10 is located axially inward of the chafer 8. The bead 10 is located radially inward of the sidewall 6. The bead 10 includes a core 28 and an apex 30.

The core 28 extends in the circumferential direction. The core 28 includes a wound wire made of steel. The core 28 has a substantially hexagonal cross-sectional shape.

The apex 30 is located radially outward of the core 28. The apex 30 includes an inner apex 30u and an outer apex 30s. The inner apex 30u extends radially outward from the core 28. The outer apex 30s is located radially outward of the inner apex 30u. The inner apex 30u is formed from a hard crosslinked rubber. The outer apex 30s is formed from a crosslinked rubber that is more flexible than the inner apex 30u.

The carcass 12 is located inward of the tread 4, the pair of sidewalls 6, and the pair of chafers 8. The carcass 12 extends on and between a first bead 10 and a second bead 10 out of the pair of beads 10.

The carcass 12 includes at least one carcass ply 32. The carcass 12 of the tire 2 is composed of one carcass ply 32. The carcass ply 32 is turned up around each core 28 from the inner side toward the outer side in the axial direction. The carcass ply 32 has a ply body 32a which extends between a first core 28 and a second core 28, and a pair of turned-up portions 32b which are connected to the ply body 32a and turned up around the respective cores 28 from the inner side toward the outer side in the axial direction.

The carcass ply 32 includes a large number of carcass cords aligned with each other, which are not shown. These carcass cords are covered with a topping rubber. Each carcass cord intersects the equator plane CL. In the tire 2, an angle of the carcass cords relative to the equator plane CL (hereinafter, referred to as intersection angle of the carcass cords) is not less than 70° and not greater than 90°. The carcass 12 has a radial structure. The carcass cords of the tire 2 are steel cords.

Each cushion layer 14 is located between the reinforcing portion 20 and the carcass 12 at an end of the reinforcing portion 20. The cushion layer 14 is formed form a flexible crosslinked rubber. The cushion layer 14 alleviates strain generated at the end of the reinforcing portion 20.

Each steel reinforcing layer 16 is located at a bead portion. The steel reinforcing layer 16 is turned up around the core 28 from the inner side toward the outer side in the axial direction along the carcass ply 32. The steel reinforcing layer 16 includes a large number of filler cords aligned with each other, which are not shown. These filler cords are covered with a topping rubber. Steel cords are used as the filler cords.

The inner liner 18 is located inward of the carcass 12. The inner liner 18 is joined to the inner surface of the carcass 12 via an insulation (not shown) formed from a crosslinked rubber. The inner liner 18 forms an inner surface of the tire 2. The inner liner 18 is formed from a crosslinked rubber that has an excellent air blocking property. The inner liner 18 maintains the internal pressure of the tire 2.

The reinforcing portion 20 is located radially inward of the tread 4. The reinforcing portion 20 is located between the tread 4 and the carcass 12 in the radial direction. The reinforcing portion 20 includes a belt 34 and a band 36.

The belt 34 includes four belt plies 38. These belt plies 38 are aligned in the radial direction. Each belt ply 38 is disposed such that both ends 38e thereof are opposed to each other across the equator plane CL. Each belt ply 38 intersects the equator plane CL. The ends 38e of each belt ply 38 are located on both sides of the equator plane CL.

The four belt plies 38 are a first belt ply 38A, a second belt ply 38B, a third belt ply 38C, and a fourth belt ply 38D.

Among the four belt plies 38, the belt ply 38 located on the inner side in the radial direction is the first belt ply 38A. The second belt ply 38B is located radially outward of the first belt ply 38A. The third belt ply 38C is located radially outward of the second belt ply 38B. The fourth belt ply 38D is located radially outward of the third belt ply 38C. The fourth belt ply 38D is the belt ply 38 located on the outer side in the radial direction among the four belt plies 38.

As shown in FIG. 1, the end 38e of each belt ply 38 is located axially outward of the shoulder circumferential groove 24s. An end 38De of the fourth belt ply 38D may be located inward of the shoulder circumferential groove 24s. From the viewpoint of preventing damage, the fourth belt ply 38D is disposed such that the end 38De of the fourth belt ply 38D does not overlap the shoulder circumferential groove 24s in the radial direction.

In FIG. 1, a length indicated by an arrow W1 is the width of the first belt ply 38A. A length indicated by an arrow W2 is the width of the second belt ply 38B. A length indicated by an arrow W3 is the width of the third belt ply 38C. A length indicated by an arrow W4 is the width of the fourth belt ply 38D. The width of each belt ply 38 is the distance in the axial direction from a first end 38e of the belt ply 38 to a second end 38e of the belt ply 38.

In the tire 2, the second belt ply 38B has the largest width W2, and the fourth belt ply 38D has the smallest width W4. An end 38Ae of the first belt ply 38A and an end 38Ce of the third belt ply 38C are located between an end 38Be of the second belt ply 38B and the end 38De of the fourth belt ply 38D in the axial direction.

The width W1 of the first belt ply 38A and the width W3 of the third belt ply 38C are equal to each other. The width W1 of the first belt ply 38A may be larger than the width W3 of the third belt ply 38C, or may be smaller than the width W3 of the third belt ply 38C.

In the tire 2, from the viewpoint of effectively increasing the stiffness of the tread portion, the ratio (W1/WT) of the width W1 of the first belt ply 38A to the width WT of the tread surface 22 is preferably not less than 0.70 and not greater than 0.90. The ratio (W2/WT) of the width W2 of the second belt ply 38B to the width WT of the tread surface 22 is preferably not less than 0.75 and not greater than 0.95. The ratio (W3/WT) of the width W3 of the third belt ply 38C to the width WT of the tread surface 22 is preferably not less than 0.70 and not greater than 0.90. The ratio (W4/WT) of the width W4 of the fourth belt ply 38D to the width WT of the tread surface 22 is not less than 0.50. The width W4 of the fourth belt ply 38D is set as appropriate in consideration of the specifications of the tire 2 (in particular, the position of each shoulder circumferential groove 24s).

In the tire 2, the width of the belt 34 is represented as the width of the belt ply 38 having the largest width. As described above, the second belt ply 38B has the largest width W2. The width of the belt 34 of the tire 2 is represented as the width W2 of the second belt ply 38B. In the tire 2, the end 38Be of the second belt ply 38B is an end 34e of the belt 34.

The band 36 includes a full band 40 and a pair of edge bands 42.

The full band 40 is disposed such that both ends 40e thereof are opposed to each other across the equator plane CL. The full band 40 intersects the equator plane CL. The ends 40e of the full band 40 are located on both sides of the equator plane CL.

Each end 40e of the full band 40 is located axially inward of the end 34e of the belt 34. Each end 40e of the full band 40 is located between the end 38Ce of the third belt ply 38C (or the end 38Ae of the first belt ply 38A) and the end 38De of the fourth belt ply 38D in the axial direction.

The pair of edge bands 42 are disposed so as to be spaced apart from each other in the axial direction. The edge bands 42 are located on both sides of the equator plane CL. In the tire 2, the fourth belt ply 38D which forms a part of the belt 34 is located between the pair of edge bands 42.

Each edge band 42 is located between the tread 4 and the full band 40 in the radial direction. The edge band 42 is located radially outward of the end 40e of the full band 40. An inner end 42ue of the edge band 42 is located axially inward of the end 40e of the full band 40. An outer end 42se of the edge band 42 is located axially outward of the end 40e of the full band 40. The edge band 42 overlaps the end 40e of the full band 40 in the radial direction.

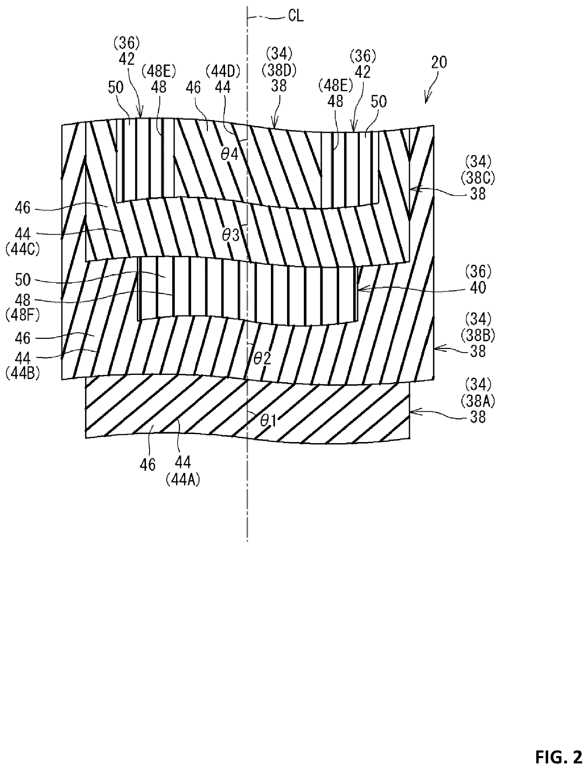

FIG. 2 shows the configuration of the reinforcing portion 20. In FIG. 2, the right-left direction is the axial direction of the tire 2, and the up-down direction is the circumferential direction of the tire 2. The direction perpendicular to the surface of the drawing sheet of FIG. 2 is the radial direction of the tire 2. The front side of the drawing sheet of FIG. 2 is the outer side in the radial direction, and the back side of this drawing sheet is the inner side in the radial direction.

As shown in FIG. 2, each belt ply 38 included in the belt 34 includes a large number of belt cords 44 aligned with each other. In FIG. 2, for the convenience of description, the belt cords 44 are represented by solid lines, but the belt cords 44 are covered with a topping rubber 46.

The belt cords 44 of the tire 2 are cords made of metal. Specifically, the belt cords 44 are steel cords. The density of the belt cords 44 in each belt ply 38 is not less than 15 ends/5 cm and not greater than 30 ends/5 cm.

In each belt ply 38, the belt cords 44 are tilted relative to the circumferential direction.

The direction in which the belt cords 44 included in the second belt ply 38B are tilted (hereinafter, referred to as tilt direction of second belt cords 44B) is the same as the direction in which the belt cords 44 included in the first belt ply 38A are titled (hereinafter, referred to as tilt direction of first belt cords 44A).

The direction in which the belt cords 44 included in the third belt ply 38C are tilted (hereinafter, referred to as tilt direction of third belt cords 44C) is opposite to the tilt direction of the second belt cords 44B.

The direction in which the belt cords 44 included in the fourth belt ply 38D are tilted (hereinafter, referred to as tilt direction of fourth belt cords 44D) is the same as the tilt direction of the third belt cords 44C.

In the tire 2, the belt 34 is formed such that the tilt direction of the second belt cords 44B and the tilt direction of the third belt cords 44C are opposite to each other. The belt cords 44 included in the second belt ply 38B and the belt cords 44 included in the third belt ply 38C intersect each other.

In the tire 2, the tilt direction of the first belt cords 44A may be opposite to the tilt direction of the second belt cords 44B. The tilt direction of the fourth belt cords 44D may be opposite to the tilt direction of the third belt cords 44C.

In FIG. 2, an angle $\theta$1 is an angle of the first belt cords 44A relative to the equator plane CL (hereinafter, referred to as tilt angle $\theta$1 of the first belt cords 44A). An angle $\theta$2 is an angle of the second belt cords 44B relative to the equator plane CL (hereinafter, referred to as tilt angle $\theta$2 of the second belt cords 44B). An angle $\theta$3 is an angle of the third belt cords 44C relative to the equator plane CL (hereinafter, referred to as tilt angle $\theta$3 of the third belt cords 44C). An angle $\theta$4 is an angle of the fourth belt cords 44D relative to the equator plane CL (hereinafter, referred to as tilt angle $\theta$4 of the fourth belt cords 44D).

In the tire 2, each of the tilt angle $\theta$1 of the first belt cords 44A, the tilt angle $\theta$2 of the second belt cords 44B, the tilt angle $\theta$3 of the third belt cords 44C, and the tilt angle $\theta$4 of the fourth belt cords 44D is preferably not less than 10° and preferably not greater than 60°.

From the viewpoint of effectively restraining movement of the tread portion and obtaining a ground-contact surface having a stable shape, the tilt angle $\theta$1 of the first belt cords 44A is more preferably not less than 40° and more preferably not greater than 60°. The tilt angle $\theta$2 of the second belt cords 44B is more preferably not less than 15° and more preferably not greater than 30°. The tilt angle $\theta$2 of the second belt cords 44B is further preferably not greater than 20°. The tilt angle $\theta$3 of the third belt cords 44C is more preferably not less than 15° and more preferably not greater than 30°. The tilt angle $\theta$3 of the third belt cords 44C is further preferably not greater than 20°. The tilt angle $\theta$4 of the fourth belt cords 44D is more preferably not less than 15° and more preferably not greater than 50°. The tilt angle $\theta$4 of the fourth belt cords 44D is further preferably not greater than 25°.

As shown in FIG. 2, the full band 40 and the edge bands 42 included in the band 38 each include a helically wound band cord 48. In FIG. 2, for the convenience of description, the band cords 48 are represented by solid lines, but each band cord 48 is covered with a topping rubber 50.

In the tire 2, the band cords 48 are cords made of metal. Specifically, the band cords 48 are steel cords. The band cords 48 may be cords formed from an organic fiber (hereinafter, referred to as organic fiber cords). In this case, examples of the organic fiber include nylon fibers, polyester fibers, rayon fibers, and aramid fibers. From the viewpoint of effectively restraining movement of the tread portion and obtaining a ground-contact surface having a stable shape, the band cords 48 are preferably cords made of metal.

In the tire 2, as a band cord 48F of the full band 40 and band cords 48E of the edge bands 42, the same cord may be used, or different cords may be used. The band cords 48 used for the full band 40 and the edge bands 42 are determined according to the specifications of the tire 2.

As described above, the full band 40 includes the helically wound band cord 48F. The full band 40 has a jointless structure. In the full band 40, an angle of the band cord 48F relative to the circumferential direction is preferably not greater than 5° and more preferably not greater than 2°. The band cord 48F extends substantially in the circumferential direction.

The density of the band cord 48F in the full band 40 is not less than 20 ends/5 cm and not greater than 35 ends/5 cm. In the present invention, the density of the band cord 48F is represented as the number of cross-sections of the band cord 48F included per 5 cm width of the full band 40 in a cross-section of the full band 40 included in the meridian cross-section.

As described above, each edge band 42 includes the helically wound band cord 48E. The edge band 42 has a jointless structure. In the edge band 42, an angle of the band cord 48E relative to the circumferential direction is preferably not greater than 5° and more preferably not greater than 2°. The band cord 48E of the edge band 42 extends substantially in the circumferential direction.

The density of the band cord 48E in the edge band 42 is not less than 20 ends/5 cm and not greater than 35 ends/5 cm. In the present disclosure, the density of the band cord 48E is represented as the number of cross-sections of the band cord 48E included per 5 cm width of the edge band 42 in a cross-section of the edge band 42 included in the meridian cross-section.

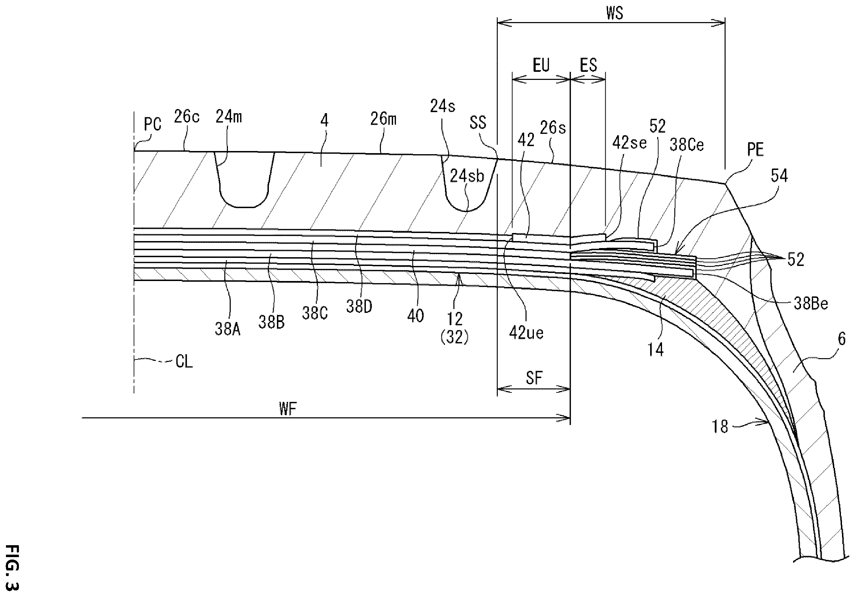

FIG. 3 shows a part of the cross-section of the tire 2 shown in FIG. 1. FIG. 3 shows the tread portion of the tire 2.

In the tire 2, each of the end 38Be of the second belt ply 38B and the end 38Ce of the third belt ply 38C is covered with a rubber layer 52. A plurality of rubber layers 52 are further disposed between the end 38Be of the second belt ply 38B and the end 38Ce of the third belt ply 38C, each of which is covered with the rubber layer 52. In the tire 2, an edge member 54 including five rubber layers 52 in total is formed between the end 38Be of the second belt ply 38B and the end 38Ce of the third belt ply 38C. The edge member 54 is formed from a crosslinked rubber. The edge member 54 contributes to maintaining the interval between the end 38Be of the second belt ply 38B and the end 38Ce of the third belt ply 38C. In the tire 2, a change of the positional relationship between the end 38Be of the second belt ply 38B and the end 38Ce of the third belt ply 38C due to running is suppressed. The edge member 54 is a part of the reinforcing portion 20. The reinforcing portion 20 of the tire 2 includes a pair of edge members 54 in addition to the belt 34 and the band 36.

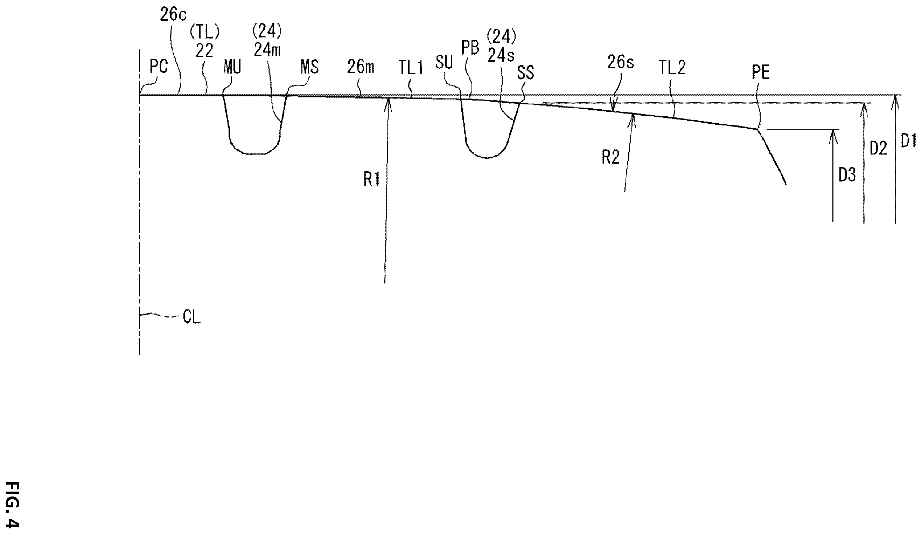

FIG. 4 shows a part of a contour line of the tire 2 in the meridian cross-section of the tire 2 shown in FIG. 1. FIG. 4 shows a part of a contour line TL of the tread surface 22. The contour line TL is obtained by measuring the outer surface shape of the tire 2 in the standardized state by a displacement sensor.

The contour line of the outer surface of the tire 2 is formed by connecting a plurality of contour lines each formed as a straight line or an arc, on the assumption that the circumferential grooves 24, decorations, etc., are not present in the measured outer surface shape.

In the meridian cross-section of the tire 2 shown in FIG. 4, the contour line TL of the tread surface 22 includes a first contour line TL1 and a pair of second contour lines TL2. The first contour line TL1 includes the equator PC. Each second contour line TL2 is located axially outward of the first contour line TL1. The second contour line TL2 is connected to the first contour line TL1 and includes the end PE of the tread surface 22. In FIG. 4, a position indicated by reference character PB is the boundary between the first contour line TL1 and the second contour line TL2. The first contour line TL1 and the second contour line TL2 are tangent to each other at the boundary PB.

The first contour line TL1 is an arc that bulges outward. In FIG. 4, an arrow indicated by reference character R1 indicates the radius of curvature of the first contour line TL1. Although not shown, the center of the first contour line TL1 is located on the equator plane CL.

In the present disclosure, an arc that bulges outward means an arc drawn so as to curve from the inner surface side of the tire toward the outer surface side of the tire. An arc drawn so as to curve from the outer surface side of the tire toward the inner surface side of the tire is referred to as an arc that is recessed inward.

The second contour line TL2 is an arc that bulges outward. In FIG. 4, an arrow indicated by reference character R2 indicates the radius of curvature of the second contour line TL2. Although not shown, the center of the second contour line TL2 is located on a straight line that passes through the boundary PB and the center of the first contour line TL1. In the tire 2, the second contour line TL2 may be a straight line. The second contour line TL2 of the tire 2 is a straight line or an arc.

In the tire 2, when each second contour line TL2 is an arc, the radius of curvature R2 of the second contour line TL2 is different from the radius of curvature R1 of the first contour line TL1. In this case, the second contour line TL2 may have a radius of curvature R2 larger than the radius of curvature R1 of the first contour line TL1, or may have a radius of curvature R2 smaller than the radius of curvature R1 of the first contour line TL1. The magnitude relationship between the radius of curvature R1 and the radius of curvature R2 is determined as appropriate according to the specifications of the tire 2.

In FIG. 4, reference character MU indicates the boundary between the middle circumferential groove 24m and the land surface of the center land portion 26c. Reference character MS indicates the boundary between the middle circumferential groove 24m and the land surface of the middle land portion 26m. Of the contour line TL of the tread surface 22, a portion between the boundary MU and the boundary MS is a portion corresponding to the middle circumferential groove 24m. The boundary MU and the boundary MS are included in the portion corresponding to the middle circumferential groove 24m. The boundary MU is the inner edge of the middle circumferential groove 24m, and is an edge of the center land portion 26c. The boundary MS is the outer edge of the middle circumferential groove 24m, and is the inner edge of the middle land portion 26m.

In FIG. 4, reference character SU indicates the boundary between the shoulder circumferential groove 24s and the land surface of the middle land portion 26m. Reference character SS indicates the boundary between the shoulder circumferential groove 24s and the land surface of the shoulder land portion 26s. Of the contour line TL of the tread surface 22, a portion between the boundary SU and the boundary SS is a portion corresponding to the shoulder circumferential groove 24s. The boundary SU and the boundary SS are included in the portion corresponding to the shoulder circumferential groove 24s. The boundary SU is the inner edge of the shoulder circumferential groove 24s, and is the outer edge of the middle land portion 26m. The boundary SS is the outer edge of the shoulder circumferential groove 24s, and is the inner edge of the shoulder land portion 26s. In the tire 2, the outer edge of the shoulder land portion 26s is the end PE of the tread surface 22.

As shown in FIG. 3, in the tire 2, each of both ends 40e of the full band 40 is located axially outward of the shoulder circumferential groove 24s. In other words, the full band 40 is located radially inward of each shoulder circumferential groove 24s.

The reinforcing portion 20 which includes the full band 40 in addition to the belt 34 effectively holds the tread portion.

As described above, in the tire 2, each edge band 42 is located radially outward of the end 40e of the full band 40. The reinforcing portion 20 which further includes the edge band 42 effectively suppresses deformation around the shoulder circumferential groove 24s.

In the tire 2, a dimensional change at a shoulder portion from the shoulder circumferential groove 24s to the shoulder land portion 26s is reduced to be small.

As shown in FIG. 4, in the contour line TL of the tread surface 22, the boundary PB between the first contour line TL1 and the second contour line TL2 is located in the portion corresponding to the shoulder circumferential groove 24s.

In the tire 2, the contour line TL of the tread surface 22 is not a single contour line but is composed of two contour lines (the first contour line TL1 and the second contour line TL2) having an inflection point in the portion corresponding to the shoulder circumferential groove 24s.

The contour line TL contributes to making a ground-contact surface shape appropriate. The boundary PB between the first contour line TL1 and the second contour line TL2 is located in the portion corresponding to the shoulder circumferential groove 24s, and the second contour line TL2 includes the end PE of the tread surface 22. Therefore, the second contour line TL2 effectively contributes to making the ground-contact surface shape appropriate at the shoulder land portion 26s.

Due to the structure of the tire 2, it is not possible to place the reinforcing portion 20 to a portion at each end PE of the tread surface 22. However, in the tire 2, the contour line TL effectively inhibits a ground-contact length from increasing at each end PE of the tread surface 22. Therefore, a difference in ground-contact length is less likely to occur between the portion at each end PE of the tread surface 22 and a portion at which the full band 40 is provided. Uneven wear is less likely to occur at each shoulder land portion 26s of the tire 2.

The tire 2 can achieve improvement of uneven wear resistance.

In FIG. 4, a length indicated by an arrow D1 is the outer diameter of the tire 2 at the equator PC. A length indicated by an arrow D2 is the outer diameter of the tire 2 at the inner edge SS of the shoulder land portion 26s. A length indicated by an arrow D3 is the outer diameter of the tire 2 at the end PE of the tread surface 22.

In the present invention, the outer diameter D1 is a first outer diameter, the outer diameter D2 is a second outer diameter, and the outer diameter D3 is a third outer diameter. The first outer diameter D1, the second outer diameter D2, and the third outer diameter D3 are specified in the tire 2 in the standardized state.

In the tire 2, the first outer diameter D1, the second outer diameter D2, and the third outer diameter D3 satisfy the following formulas (1) and (2).

$$D1 > D2 > D3 \qquad\qquad (1)$$

$$0.65 \le (D2 - D3)/(D1 - D3) \le 0.85 \qquad (2)$$

In the tire 2, the second outer diameter D2 is smaller than the first outer diameter D1, and the third outer diameter D3 is smaller than the second outer diameter D2. The inner edge SS of the shoulder land portion 26s located axially outward of the equator PC is located radially inward of the equator PC. The end PE of the tread surface 22 located axially outward of the inner edge SS of the shoulder land portion 26s is located radially inward of the inner edge SS of the shoulder land portion 26s. In other words, the position in the radial direction of the tread surface 22 at the inner edge SS of the shoulder land portion 26s is located inward of the position in the radial direction of the tread surface 22 at the equator PC, and the position in the radial direction of the tread surface 22 at the end PE of the tread surface 22 is located inward of the position in the radial direction of the tread surface 22 at the inner edge SS of the shoulder land portion 26s.

When the degree of change of the position in the radial direction of the tread surface 22 is defined as a drop amount, in the tire 2, a drop amount, at the shoulder land portion 26s, represented by the difference (D2 - D3) between the second outer diameter D2 and the third outer diameter D3 is adjusted with respect to the drop amount, of the entire tread surface 22, represented by the difference (D1 - D3) between the first outer diameter D1 and the third outer diameter D3, whereby a profile of the tread surface 22 is controlled. Accordingly, the ground-contact length, at the end PE of the tread surface 22, which is not easily controlled since, due to the structure of the tire 2, it is not possible to place the reinforcing portion 20 to the portion at the end PE of the tread surface 22, is effectively controlled.

Specifically, when a ratio (D2 - D3)/(D1 - D3) is set to be not less than 0.65, the ground-contact length at the end PE of the tread surface 22 can be inhibited from being excessively long. Since the ground-contact length at the end PE of the tread surface 22 is set to be an appropriate length, a difference in ground-contact length is inhibited from occurring at the shoulder land portion 26s. Uneven wear is less likely to occur at the shoulder land portion 26s of the tire 2. From this viewpoint, the ratio (D2 - D3)/(D1 - D3) is more preferably not less than 0.70.

When the ratio (D2 - D3)/(D1 - D3) is set to be not greater than 0.85, the ground-contact length at the end PE of the tread surface 22 is inhibited from being excessively small. In this case as well, since the ground-contact length at the end PE of the tread surface 22 can be set to be an appropriate length, a difference in ground-contact length is inhibited from occurring at the shoulder land portion 26s. Uneven wear is less likely to occur at the shoulder land portion 26s of the tire 2. From this viewpoint, the ratio (D2 - D3)/(D1 - D3) is more preferably not greater than 0.80.

As described above, in the tire 2, each second contour line TL2 is a straight line or an arc. In the case where each second contour line TL2 is an arc, when the unit of the radius of curvature R2 of the second contour line TL2 is millimeter, a curvature represented by the reciprocal of the radius of curvature R2 is preferably not greater than 0.002 mm$^{-1}$. Accordingly, the volume of the shoulder land portion 26s is effectively reduced. The reduction of the volume contributes to reduction of rolling resistance. The tire 2 can achieve improvement of uneven wear resistance while reducing rolling resistance. From this viewpoint, the curvature of the second contour line TL2 is more preferably not greater than 0.001 mm$^{-1}$.

In the tire 2, from the viewpoint of more effectively reducing the volume of the shoulder land portion 26s and further reducing rolling resistance, further preferably, the curvature of the second contour line TL2 is 0 (zero) mm$^{-1}$, that is, the second contour line TL2 is a straight line.

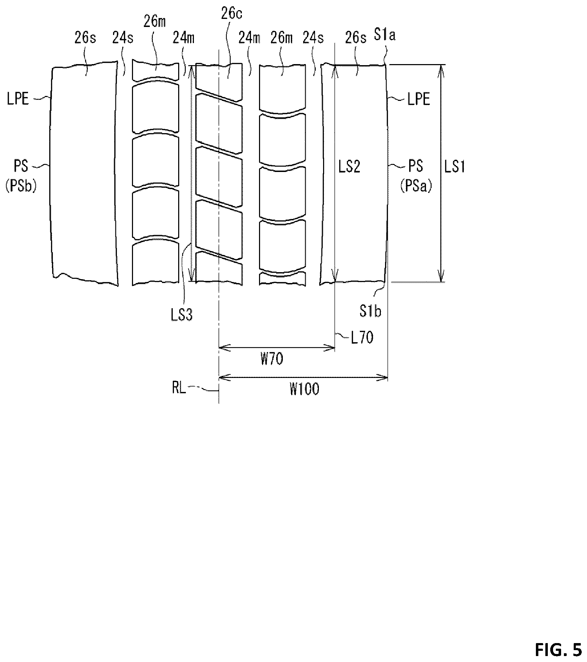

FIG. 5 shows the shape of a ground-contact surface (ground-contact shape) of the tire 2. In FIG. 5, the up-down direction is the longitudinal direction of the ground-contact surface. The longitudinal direction corresponds to the circumferential direction of the tire 2. The right-left direction is the width direction of the ground-contact surface. The width direction corresponds to the axial direction of the tire 2.

The ground-contact shape of the tire 2 is obtained, using a ground-contact shape measuring device (not shown), for example, by taking, with a camera, an image of a ground-contact surface obtained when a standardized load is applied to the tire 2 in the standardized state and the tire 2 is brought into contact with a flat road surface with a camber angle being set to 0 degrees, or transferring the ground-contact surface. As shown in FIG. 5, the ground-contact shape may be obtained by tracing the taken image of the ground-contact surface.

In the tire 2, when the ends PE of the tread surface 22 cannot be identified from the appearance, positions, on the tread surface 22, corresponding to the axially outer ends of the ground-contact shape obtained thus are used as the ends PE of the tread surface 22.

The ground-contact shape shown in FIG. 5 includes the shapes of the land surfaces of the center land portion 26c, each middle land portion 26m, and each shoulder land portion 26s.

An alternate long and short dash line RL is a reference line indicating the center position in the width direction of the ground-contact shape. The reference line RL normally coincides with the equator plane CL of the tire 2.

Each solid line indicated by reference character LPE is a line corresponding to the end PE of the tread surface 22 included in the ground-contact shape. A length indicated by a double-headed arrow LS1 is the length of a line segment connecting a first end S1a and a second end S1b of the solid line LPE. In the present disclosure, the length LS1 is the length of the ground-contact surface at the end PE of the tread surface 22, and is represented as a ground-contact length LS1.

A position indicated by reference character PS on each solid line LPE is an axially outer end of the ground-contact shape. The distance in the width direction from a first axially outer end PSa to a second axially outer end PSb is the maximum ground-contact width of the ground-contact shape. Each axially outer end PS is a position indicating the maximum ground-contact width.

A length indicated by a double-headed arrow W100 is the distance in the width direction from the reference line RL to the axially outer end PS, and is referred to as a reference width.

A solid line indicated by reference character L70 is a straight line that is located between the reference line RL and the axially outer end PS and extends in the longitudinal direction. A length indicated by a double-headed arrow W70 is the distance in the width direction from the reference line RL to the solid line L70. In the present disclosure, the ratio (W70/W100) of the distance W70 in the axial direction to the reference width W100 is 70%. The solid line L70 represents a position corresponding to a width that is 70% of the maximum ground-contact width.

A length indicated by a double-headed arrow LS2 is the length of a line of intersection between the solid line L70 and the ground-contact shape. In the present disclosure, the length LS2 is the length of the ground-contact surface at a position corresponding to a width that is 70% of the maximum ground-contact width, and is represented as a ground-contact length LS2.

A length indicated by a double-headed arrow LS3 is the length of a line of intersection between the reference line RL and the ground-contact shape. In the present disclosure, the length LS3 is the length of the ground-contact surface at a ground-contact width center, and is represented as a ground-contact length LS3.

In the tire 2, the ratio (LS2/LS1) of the ground-contact length LS2 to the ground-contact length LS1 is preferably not less than 0.90 and not greater than 1.10.

In the ground-contact surface in which the ratio (LS2/LS1) is not less than 0.90, the difference between the ground-contact length at the portion at the end PE of the tread surface 22 and the ground-contact length at the portion at the inner edge SS of the shoulder land portion 26s is small. Uneven wear is less likely to occur at the shoulder land portion 26s of the tire 2. From this viewpoint, the ratio (LS2/LS1) is more preferably not less than 0.95.

Also, in the ground-contact surface in which the ratio (LS2/LS1) is not greater than 1.10, the difference between the ground-contact length at the portion at the end PE of the tread surface 22 and the ground-contact length at the portion at the inner edge SS of the shoulder land portion 26s is small. In this case as well, uneven wear is less likely to occur at the shoulder land portion 26s of the tire 2. From this viewpoint, the ratio (LS2/LS1) is more preferably not greater than 1.05.

In the tire 2, the ratio (LS3/LS2) of the ground-contact length LS3 to the ground-contact length LS2 is preferably not less than 0.95 and not greater than 1.20.

In the ground-contact surface in which the ratio (LS3/LS2) is not less than 0.95, the difference between the ground-contact length at the ground-contact width center and the ground-contact length at the portion at the inner edge SS of the shoulder land portion 26s is small. Uneven wear is less likely to occur at the center land portion 26c of the tire 2. From this viewpoint, the ratio (LS3/LS2) is more preferably not less than 1.00.

In the ground-contact surface in which the ratio (LS3/LS2) is not greater than 1.20, the contact pressure at the ground-contact width center is maintained at an appropriate pressure. In this case as well, uneven wear is less likely to occur at the center land portion 26c. From this viewpoint, the ratio (LS3/LS2) is more preferably not greater than 1.15.

In the tire 2, from the viewpoint of achieving good uneven wear resistance, more preferably, the ratio (LS2/LS1) is not less than 0.90 and not greater than 1.10, and the ratio (LS3/LS2) is not less than 0.95 and not greater than 1.20.

In FIG. 3, a length indicated by an arrow WF is the width of the full band 40. The width WF of the full band 40 is the distance in the axial direction from a first end 40e of the full band 40 to a second end 40e of the full band 40. A length indicated by a double-headed arrow EU is the distance in the axial direction from the end 40e of the full band 40 to the inner end 42ue of the edge band 42. A length indicated by a double-headed arrow ES is the distance in the axial direction from the end 40e of the full band 40 to the outer end 42se of the edge band 42.

In the tire 2, the ratio (WF/WT) of the width WF of the full band 40 to the width WT of the tread surface 22 is preferably not less than 0.65 and not greater than 0.80.

When the ratio (WF/WT) is set to be not less than 0.65, the full band 40 effectively holds the tread portion. In the tire 2, since a dimensional change is reduced to be small, good uneven wear resistance is achieved. From this viewpoint, the ratio (WF/WT) is more preferably not less than 0.70.

When the ratio (WF/WT) is set to be not greater than 0.80, the end 40e of the full band 40 is located at an appropriate distance from the end PE of the tread surface 22. Fluctuation of the tension of the band cord 48F at the end 40e of the full band 40 is effectively suppressed. Occurrence of a break of the band cord 48F in the full band 40 is suppressed, so that the full band 40 can stably exhibit the function of holding the tread portion. In the tire 2, good uneven wear resistance is maintained. From this viewpoint, the ratio (WF/WT) is more preferably not greater than 0.75.

As shown in FIG. 3, in the tire 2, each end 40e of the full band 40 is located between the inner end 42ue and the outer end 42se of the edge band 42 in the axial direction.

In the tire 2, the distance EU in the axial direction from the end 40e of the full band 40 to the inner end 42ue of the edge band 42 is preferably not less than 8 mm. Accordingly, the inner end 42ue of the edge band 42 is located at an appropriate distance from the end 40e of the full band 40. In the tire 2, occurrence of damage caused due to concentration of strain on the inner end 42ue of the edge band 42 and/or the end 40e of the full band 40 is suppressed. Since the edge band 42 can effectively hold the end 40e of the full band 40, fluctuation of the tension of the band cord 48F included in the full band 40 is suppressed. In the tire 2, occurrence of a break of the band cord 48F due to the tension fluctuation is suppressed. The band 36 of the tire 2 can more stably exhibit the function of holding the tread portion. From this viewpoint, the distance EU in the axial direction is more preferably not less than 10 mm. From the viewpoint of suppressing the influence of the edge band 42 on the mass of the tire 2, the distance EU in the axial direction is preferably not greater than 50 mm.

In the tire 2, involvement in occurrence of damage starting from a bottom 24sb of the shoulder circumferential groove 24s is taken into consideration for setting the position of the inner end 42ue of the edge band 42. From the viewpoint of effectively suppressing occurrence of damage starting from the bottom 24sb of the shoulder circumferential groove 24s, in the axial direction, the inner end 42ue of the edge band 42 is preferably located outward of the bottom 24sb of the shoulder circumferential groove 24s, and is more preferably located further outward of the shoulder circumferential groove 24s. In the tire 2, the inner end 42ue of the edge band 42 may be located inward of the bottom 24sb of the shoulder circumferential groove 24s in the axial direction. In this case, the inner end 42ue of the edge band 42 is more preferably located further inward of the shoulder circumferential groove 24s in the axial direction.

In the tire 2, the distance ES in the axial direction from the end 40e of the full band 40 to the outer end 42se of the edge band 42 is preferably not less than 8 mm. Accordingly, the outer end 42se of the edge band 42 is located at an appropriate distance from the end 40e of the full band 40. In the tire 2, occurrence of damage caused due to concentration of strain on the outer end 42se of the edge band 42 and/or the end 40e of the full band 40 is suppressed. Since the edge band 42 can effectively hold the end 40e of the full band 40, fluctuation of the tension of the band cord 48F included in the full band 40 is suppressed. In the tire 2, occurrence of a break of the band cord 48F due to the tension fluctuation is suppressed. The band 36 of the tire 2 can stably exhibit the function of holding the tread portion. From this viewpoint, the distance ES in the axial direction is more preferably not less than 10 mm.

In the tire 2, a preferable upper limit of the distance ES in the axial direction is set as appropriate in consideration of the distance in the axial direction from the outer end 42se of the edge band 42 to the end 38Ce of the third belt ply 38C and the influence on the mass of the tire 2.

As described above, in the tire 2, each end 40e of the full band 40 is located axially inward of the end 34e of the belt 34. The belt 34 is wider than the full band 40. The belt 34 holds each end 40e of the full band 40. The belt 34 contributes to suppression of fluctuation of the tension of the band cord 48F included in the full band 40. Since occurrence of a break of the band cord 48F due to the tension fluctuation is prevented, the full band 40 can stably exhibit the function of holding the tread portion. From this viewpoint, each end 40e of the full band 40 is preferably located axially inward of the end 34e of the belt 34.

In the tire 2, furthermore, the full band 40 is located between the second belt ply 38B and the third belt ply 38C in the radial direction.

The second belt ply 38B and the third belt ply 38C reduce the force acting on the full band 40. In particular, since the belt cords 44 included in the second belt ply 38B and the belt cords 44 included in the third belt ply 38C intersect each other, the force acting on the full band 40 is effectively reduced. Since fluctuation of the tension of the band cord 48F included in the full band 40 is suppressed, occurrence of a break of the band cord 48F due to this tension fluctuation is prevented. The full band 40 of the tire 2 can stably exhibit the function of holding the tread portion. From this viewpoint, in the tire 2, the full band 40 is preferably located between the second belt ply 38B and the third belt ply 38C in the radial direction.

As shown in FIG. 3, in the axial direction, the end 40e of the full band 40 is located inward of the end 38Be of the second belt ply 38B, and the end 40e of the full band 40 is located inward of the end 38Ce of the third belt ply 38C. In other words, the second belt ply 38B is wider than the full band 40. The third belt ply 38C is also wider than the full band 40. In the tire 2, the full band 40 is interposed between the second belt ply 38B and the third belt ply 38C which are wider than the full band 40. Since fluctuation of the tension of the band cord 48F included in the full band 40 is more effectively suppressed, a break is less likely to occur in the band cord 48F of the full band 40. The full band 40 of the tire 2 can stably exhibit the function of holding the tread portion. From this viewpoint, in the tire 2, more preferably, the full band 40 is located between the second belt ply 38B and the third belt ply 38C in the radial direction, each end 40e of the full band 40 is located axially inward of the end 38Be of the second belt ply 38B, and each end 40e of the full band 40 is located axially inward of the end 38Ce of the third belt ply 38C.

In FIG. 3, a double-headed arrow SF indicates the distance in the axial direction from the shoulder circumferential groove 24s, specifically, the outer edge SS of the shoulder circumferential groove 24s, to the end 40e of the full band 40. A double-headed arrow WS indicates the width of the shoulder land portion 26s.

In the tire 2, the ratio (SF/WS) of the distance SF in the axial direction from the shoulder circumferential groove 24s to the end 40e of the full band 40, to the width WS of the shoulder land portion 26s, is preferably not greater than 50%. Accordingly, the end 40e of the full band 40 is located away from the portion at the end PE of the tread surface 22 which moves actively in a running state, so that fluctuation of the tension of the band cord 48F is suppressed. In the tire 2, occurrence of a break of the band cord 48F is suppressed. Since the full band 40 of the tire 2 can stably exhibit the function of holding the tread portion, a dimensional change is suppressed. From this viewpoint, the ratio (SF/WS) is more preferably not greater than 35% and further preferably not greater than 25%.

When the ratio (SF/WS) is set to be not less than 10%, the end 40e of the full band 40 is located at an appropriate interval from the shoulder circumferential groove 24s, specifically, the bottom 24sb of the shoulder circumferential groove 24s. In the tire 2, occurrence of damage starting from the bottom 24sb of the shoulder circumferential groove 24s is suppressed. Since the width of the full band 40 is ensured, the full band 40 contributes to suppression of a dimensional change. From this viewpoint, the ratio (SF/WS) is more preferably not less than 15%.

As is obvious from the above description, according to the present invention, the heavy duty tire 2 that can achieve improvement of uneven wear resistance is obtained.

EXAMPLES

Hereinafter, the present invention will be described in further detail by means of examples, etc..

[Example 1]

A heavy duty tire (tire size = 355/50R22.5) having the basic structure shown in FIG. 1 and having specifications shown in Table 1 below was obtained.

In Example 1, the band includes a pair of edge bands in addition to a full band. This is indicated as "Y" in the cell for "Edge band" in Table 1.

The contour line TL of the tread surface was composed of a first contour line TL1 which is an arc, and second contour lines TL2 which are arcs. The curvature of each second contour line TL2 was set to 0.0020 mm$^{-1}$, and the curvature of the first contour line TL1 was controlled such that the boundary PB between the first contour line TL1 and each second contour line TL2 was located in the portion corresponding to the shoulder circumferential groove. This is indicated as "S" in the cell for "Boundary" in Table 1.

As for the outer diameter of the tire, the second outer diameter D2 was smaller than the first outer diameter D1, the third outer diameter D3 was smaller than the second outer diameter D2, and the ratio (D2 - D3)/(D1 - D3) was 0.75.

A ground-contact shape was obtained by the above-described method, and it was confirmed that the ratio (LS2/LS1) was 1.00 and the ratio (LS3/LS2) was 1.10.

[Comparative Example 1]

The differences from the configuration of Example 1 are as follows.

The band of Comparative Example 1 was composed of only a full band. The fact that the band includes no edge band is indicated as "N" in the cell for "Edge band" in Table 1. The configuration of the full band is the same as that of Example 1.

The contour line TL of the Comparative Example 1 was composed of a single arc.

As for the outer diameter of the tire, the second outer diameter D2 was set to be smaller than the first outer diameter D1, and the third outer diameter D3 was set to be smaller than the second outer diameter D2, but the ratio (D2 - D3)/(D1 - D3) was 0.60. The ratio (LS2/LS1) was 0.85, and the ratio (LS3/LS2) was 1.00.

[Comparative Example 2]

A tire of Comparative Example 2 was obtained in the same manner as Example 1, except that the band was composed of only a full band having the same configuration as that of the full band of Example 1.

[Comparative Example 3]

The differences from the configuration of Example 1 are as follows.

The band of Comparative Example 3 was composed of only a full band having the same configuration as that of the full band of Example 1.

Similar to Example 1, the contour line TL was composed of a first contour line TL1 and second contour lines TL2 (curvature = 0.0020 mm$^{-1}$), but the curvature of the first contour line TL1 was controlled such that the boundary PB was located in the portion corresponding to the middle circumferential groove. This is indicated as "M" in the cell for "Boundary" in Table 1.

As for the outer diameter of the tire, the outer diameter was set in the same manner as Example 1, but the ratio (LS2/LS1) was 1.15 and the ratio (LS3/LS2) was 1.20.

[Examples 2 and 3]

Tires of Examples 2 and 3 were obtained in the same manner as Example 1, except that the curvatures of the first contour line TL1 and each second contour line TL2 were adjusted such that the ratio (D2 - D3)/(D1 - D3), the ratio (LS2/LS1), and the ratio (LS3/LS2) were set as shown in Table 2 below.

[Example 4]

A tire of Example 4 was obtained in the same manner as Example 1, except that each second contour line was a straight line (that is, curvature = 0.0000 mm$^{-1}$).

[Example 5]

A tire of Example 5 was obtained in the same manner as Example 1, except that the curvature of each second contour line was set as shown in Table 2 below.

[Dimensional Change]

A test tire was fitted onto a standardized rim and inflated with air to adjust the internal pressure of the tire to a standardized internal pressure. In a state where no load was applied to the tire, the outer diameter of the tire (pre-running outer diameter) at the inner edge of the shoulder land portion (outer edge of the shoulder circumferential groove) was measured.

The tire was mounted to a drum tester, a load that was 85% of a standardized load was applied to the tire, and the tire was caused to run on a drum at a speed of 80 km/h for 1000 km. After running, the outer diameter of the tire (post-running outer diameter) was measured at the position at which the pre-running outer diameter had been measured, and the amount of change in outer diameter was obtained. The results are shown in Tables 1 and 2 below as indexes with the result of Comparative Example 2 being regarded as 100. A higher value represents that the dimensional change is reduced to be smaller.

[Uneven Wear Resistance]

A test tire was fitted onto a standardized rim and inflated with air to adjust the internal pressure of the tire to a standardized internal pressure. The tire was mounted to the steering shaft of a test vehicle. The test vehicle was loaded with luggage and was caused to run on general roads. When the wear rate of the tire reached 30% in terms of mass, the wear amount at the center land portion of the test tire and the wear amount at the shoulder land portion of the test tire were obtained. The results are shown in Tables 1 and 2 below as indexes with the result of Comparative Example 2 being regarded as 100. A higher value represents that the wear amount is smaller and the uneven wear resistance is better.

[Rolling Resistance]

Using a rolling resistance testing machine, a rolling resistance coefficient (RRC) was measured when a test tire ran on a drum at a speed of 80 km/h under the following conditions. The results are shown in Tables 1 and 2 below as indexes with the result of Comparative Example 2 being regarded as 100. The higher the value is, the lower the rolling resistance of the tire is.

Rim: standardized rim
Internal pressure: standardized internal pressure
Vertical load: 85% of standardized load

[Table 1]

|  |  | Comparative Example 1 | Comparative Example 2 | Comparative Example 3 | Example 1 |
|---|---|---|---|---|---|
| Edge band |  | N | N | N | Y |
| Boundary |  | - | S | M | S |
| (D2 - D3)/(D1 - D3) [-] |  | 0.60 | 0.75 | 0.75 | 0.75 |
| Second contour line |  | - | Arc | Arc | Arc |
| Curvature [1/mm] |  | - | 0.0020 | 0.0020 | 0.0020 |
| LS2/LS1 [-] |  | 0.85 | 1.00 | 1.15 | 1.00 |
| LS3/LS2 [-] |  | 1.00 | 1.10 | 1.20 | 1.10 |
| Dimensional change |  | 100 | 100 | 100 | 110 |
| Uneven wear resistance | Shoulder wear | 90 | 100 | 90 | 115 |
|  | Center wear | 95 | 100 | 90 | 105 |
| RRC |  | 100 | 100 | 100 | 105 |

[Table 2]

|  | Example 2 | Example 3 | Example 4 | Example 5 |
|---|---|---|---|---|
| Edge band | Y | Y | Y | Y |
| Boundary | S | S | S | S |
| (D2 - D3)/(D1 - D3) [-] | 0.60 | 0.90 | 0.75 | 0.75 |
| Second contour line | Arc | Arc | Straight line | Arc |
| Curvature [1/mm] | 0.0020 | 0.0020 | 0.0000 | 0.0025 |

(continued)

| | | Example 2 | Example 3 | Example 4 | Example 5 |
|---|---|---|---|---|---|
| LS2/LS1 [-] | | 0.85 | 1.15 | 1.00 | 1.00 |
| LS3/LS2 [-] | | 0.90 | 1.25 | 1.10 | 1.10 |
| Dimensional change | | 110 | 110 | 110 | 110 |
| Uneven wear resistance | Shoulder wear | 105 | 105 | 115 | 115 |
| | Center wear | 100 | 100 | 105 | 105 |
| RRC | | 100 | 100 | 110 | 100 |

As shown in Tables 1 and 2, it is confirmed that improvement of uneven wear resistance is achieved in each Example. From the evaluation results, advantages of the present invention are clear.

The above-described technology capable of achieving improvement of uneven wear resistance can be applied to various tires.

Claims

1. A heavy duty tire (2) having a nominal aspect ratio of not greater than 70%, the tire (2) comprising:

a tread (4); and
a reinforcing portion (20) located radially inward of the tread (4), wherein
a plurality of land portions (26, 26c, 26m, 26s) demarcated by a plurality of circumferential grooves (24, 24m, 24s) are formed in the tread (4),
among the plurality of circumferential grooves (24, 24m, 24s), a circumferential groove (24) located on each outer side in an axial direction is a shoulder circumferential groove (24s),
among the plurality of land portions (26, 26c, 26m, 26s), a land portion (26) located axially outward of the shoulder circumferential groove (24s) is a shoulder land portion (26s),
the reinforcing portion (20) includes a belt (34) including a large number of belt cords (44, 44A, 44B, 44C, 44D) aligned with each other, and a band (36) including a helically wound band cord (48, 48F, 48E),
the band (36) includes a full band (40),
each of both ends (40e) of the full band (40) is located axially outward of the shoulder circumferential groove (24s),
the tread (4) has a tread surface (22) which comes into contact with a road surface,
in a meridian cross-section, a contour line (TL) of the tread surface (22) includes a first contour line (TL1) including an equator (PC), and a pair of second contour lines (TL2) connected to the first contour line (TL1) and each including an end (PE) of the tread surface (22),
the first contour line (TL1) is an arc,
each of the pair of second contour lines (TL2) is a straight line or an arc,
when each second contour line (TL2) is an arc, a radius of curvature (R2) of the second contour line (TL2) is different from a radius of curvature (R1) of the first contour line (TL1), and
in the contour line (TL) of the tread surface (22), a boundary (PB) between the first contour line (TL1) and the second contour line (TL2) is located in a portion corresponding to the shoulder circumferential groove (24s);

characterized in that

the band (36) includes a pair of edge bands (42), the pair of edge bands (42) are disposed so as to be spaced apart from each other in the axial direction, and are each located radially outward of the end (40e) of the full band (40),
an outer diameter of the tire (2) at the equator (PC) is a first outer diameter D1,
an outer diameter of the tire (2) at an inner edge (SS) of the shoulder land portion (26s) is a second outer diameter D2,
an outer diameter of the tire (2) at the end (PE) of the tread surface (22) is a third outer diameter D3, and
the first outer diameter D1, the second outer diameter D2, and the third outer diameter D3 satisfy the following formulas (1) and (2),

$$D1 > D2 > D3 \qquad (1),$$

$$0.65 \leq (D2 - D3)/(D1 - D3) \leq 0.85 \qquad (2).$$

2. The heavy duty tire (2) according to claim 1, wherein

   each second contour line (TL2) is an arc, and
   when a unit of the radius of curvature (R2) of the second contour line (TL2) is millimeter, a curvature represented by a reciprocal of the radius of curvature (R2) is not greater than 0.002 $mm^{-1}$.

3. The heavy duty tire (2) according to claim 1, wherein each second contour line (TL2) is a straight line.

4. The heavy duty tire (2) according to any one of claims 1 to 3, wherein

   in a shape of a ground-contact surface obtained when the tire (2) is fitted on a standardized rim, an internal pressure of the tire (2) is adjusted to a standardized internal pressure, a standardized load is applied to the tire (2), and the tire (2) is brought into contact with a flat road surface, a length of the ground-contact surface at the end (PE) of the tread surface (22) is a ground-contact length LS1, and a length of the ground-contact surface at a position corresponding to a width that is 70% of a maximum ground-contact width is a ground-contact length LS2, and
   a ratio (LS2/LS1) of the ground-contact length LS2 to the ground-contact length LS1 is not less than 0.90 and not greater than 1.10.

5. The heavy duty tire (2) according to claim 4, wherein

   in the ground-contact surface, a length of the ground-contact surface at a ground-contact width center is a ground-contact length LS3, and
   a ratio (LS3/LS2) of the ground-contact length LS3 to the ground-contact length LS2 is not less than 0.95 and not greater than 1.20.

6. The heavy duty tire (2) according to any one of claims 1 to 5, wherein a ratio (WF/WT) of a width (WF) of the full band (40) to a width (WT) of the tread surface (22) is not less than 0.65 and not greater than 0.80.

7. The heavy duty tire (2) according to any one of claims 1 to 6, wherein a distance (EU) in the axial direction from the end (40e) of the full band (40) to an inner end (42ue) of the edge band (42) is not less than 8.0 mm, and a distance (ES) in the axial direction from the end (40e) of the full band (40) to an outer end (42se) of the edge band (42) is not less than 8.0 mm.

**Patentansprüche**

1. Schwerlastreifen (2) mit einem Nennaspektverhältnis von nicht mehr als 70 %, wobei der Reifen (2) umfasst:

   eine Lauffläche (4); und
   einen Verstärkungsabschnitt (20), der sich radial innen von der Lauffläche (4) befindet, wobei
   eine Vielzahl von Landabschnitten (26, 26c, 26m, 26s), die durch eine Vielzahl von Umfangsrillen (24, 24m, 24s) abgegrenzt sind, in der Lauffläche (4) ausgebildet sind,
   unter der Vielzahl von Umfangsrillen (24, 24m, 24s) eine Umfangsrille (24), die sich auf jeder Außenseite in einer axialen Richtung befindet, eine Schulterumfangsrille (24s) ist,
   unter der Vielzahl von Landabschnitten (26, 26c, 26m, 26s) ein Landabschnitt (26), der sich axial außen von der Schulterumfangsrille (24s) befindet, ein Schulterlandabschnitt (26s) ist,
   der Verstärkungsabschnitt (20) einen Gürtel (34), der eine große Anzahl von Gürtelkorden (44, 44A, 44B, 44C, 44D) umfasst, die miteinander ausgerichtet sind, und ein Band (36) umfasst, das einen spiralförmig gewickelten Bandkord (48, 48F, 48E) umfasst,
   das Band (36) ein Vollband (40) umfasst,
   ein jedes von beiden Enden (40e) des Vollbands (40) sich axial außen von der Schulterumfangsrille (24s) befindet,
   die Lauffläche (4) eine Laufflächenoberfläche (22) aufweist, die mit einer Straßenoberfläche in Kontakt kommt,
   in einem Meridianquerschnitt eine Konturlinie (TL) der Laufflächenoberfläche (22) eine erste Konturlinie (TL1), die einen Äquator (PC) umfasst, und ein Paar zweite Konturlinien (TL2) umfasst, die mit der ersten Konturlinie (TL1) verbunden sind und jeweils ein Ende (PE) der Laufflächenoberfläche (22) umfassen,

die erste Konturlinie (TL1) ein Bogen ist,

eine jede von dem Paar zweiter Konturlinien (TL2) eine gerade Linie oder ein Bogen ist,

wenn jede zweite Konturlinie (TL2) ein Bogen ist, ein Krümmungsradius (R2) der zweiten Konturlinie (TL2) sich von einem Krümmungsradius (R1) der ersten Konturlinie (TL1) unterscheidet, und

in der Konturlinie (TL) der Laufflächenoberfläche (22) sich eine Grenze (PB) zwischen der ersten Konturlinie (TL1) und der zweiten Konturlinie (TL2) in einem Abschnitt befindet, der der Schulterumfangsrille (24s) entspricht,

**dadurch gekennzeichnet, dass**

das Band (36) ein Paar Randbänder (42) umfasst, wobei das Paar Randbänder (42) so angeordnet ist, dass sie in der axialen Richtung voneinander beabstandet sind und sich jeweils radial außen von dem Ende (40e) des Vollbands (40) befinden,

ein Außendurchmesser des Reifens (2) an dem Äquator (PC) ein erster Außendurchmesser D1 ist,

ein Außendurchmesser des Reifens (2) an einem Innenrand (SS) des Schulterlandabschnitts (26s) ein zweiter Außendurchmesser D2 ist,

ein Außendurchmesser des Reifens (2) an dem Ende (PE) der Laufflächenoberfläche (22) ein dritter Außendurchmesser D3 ist, und

der erste Außendurchmesser D1, der zweite Außendurchmesser D2 und der dritte Außendurchmesser D3 die folgenden Formeln (1) und (2) erfüllen,

$$D1 > D2 > D3 \quad (1),$$

$$0{,}65 \leq (D2 - D3)/(D1 - D3) \leq 0{,}85 \quad (2).$$

2. Schwerlastreifen (2) nach Anspruch 1, wobei

jede zweite Konturlinie (TL2) ein Bogen ist, und

wenn eine Einheit des Krümmungsradius (R2) der zweiten Konturlinie (TL2) Millimeter ist, eine Krümmung, die durch einen Kehrwert des Krümmungsradius (R2) dargestellt ist, nicht größer als $0{,}002 \ \mathrm{mm}^{-1}$ ist.

3. Schwerlastreifen (2) nach Anspruch 1, wobei jede zweite Konturlinie (TL2) eine gerade Linie ist.

4. Schwerlastreifen (2) nach einem der Ansprüche 1 bis 3, wobei

in einer Form einer Bodenkontaktfläche, die erhalten wird, wenn der Reifen (2) auf eine standardisierte Felge aufgezogen ist, ein Innendruck des Reifens (2) auf einen standardisierten Innendruck eingestellt ist, eine standardisierte Last auf den Reifen (2) aufgebracht ist und der Reifen (2) mit einer flachen Straßenoberfläche in Kontakt gebracht ist, eine Länge der Bodenkontaktfläche an dem Ende (PE) der Laufflächenoberfläche (22) eine Bodenkontaktlänge LS1 ist und eine Länge der Bodenkontaktfläche an einer Position, die einer Breite entspricht, die 70 % einer maximalen Bodenkontaktbreite ist, eine Bodenkontaktlänge LS2 ist, und

ein Verhältnis (LS2/LS1) der Bodenkontaktlänge LS2 zu der Bodenkontaktlänge LS1 nicht weniger als 0,90 und nicht mehr als 1,10 beträgt.

5. Schwerlastreifen (2) nach Anspruch 4, wobei

in der Bodenkontaktfläche eine Länge der Bodenkontaktfläche an einer Bodenkontaktbreitenmitte eine Bodenkontaktlänge LS3 ist und

ein Verhältnis (LS3/LS2) der Bodenkontaktlänge LS3 zu der Bodenkontaktlänge LS2 nicht weniger als 0,95 und nicht mehr als 1,20 beträgt.

6. Schwerlastreifen (2) nach einem der Ansprüche 1 bis 5, wobei ein Verhältnis (WF/WT) einer Breite (WF) des Vollbands (40) zu einer Breite (WT) der Laufflächenoberfläche (22) nicht weniger als 0,65 und nicht mehr als 0,80 beträgt.

7. Schwerlastreifen (2) nach einem der Ansprüche 1 bis 6, wobei ein Abstand (EU) in der axialen Richtung von dem Ende (40e) des Vollbands (40) zu einem inneren Ende (42ue) des Randbands (42) nicht weniger als 8,0 mm beträgt und ein Abstand (ES) in der axialen Richtung von dem Ende (40e) des Vollbands (40) zu einem äußeren Ende (42se) des Randbands (42) nicht weniger als 8,0 mm beträgt.

**Revendications**

1. Pneumatique pour service intensif (2) ayant un rapport d'aspect nominal qui n'est pas supérieur à 70 %, le pneumatique (2) comprenant :

    une bande de roulement (4) ; et
    une portion de renforcement (20) située radialement à l'intérieur de la bande de roulement (4), dans lequel
    une pluralité de portions en relief (26, 26c, 26m, 26s) délimitées par une pluralité de rainures circonférentielles (24, 24m, 24s) sont formées dans la bande de roulement (4),
    parmi la pluralité de rainures circonférentielles (24, 24m, 24s), une rainure circonférentielle (24) située sur chaque côté extérieur dans une direction axiale est une rainure circonférentielle d'épaulement (24s),
    parmi la pluralité de portions en relief (26, 26c, 26m, 26s), une portion en relief (26) située axialement à l'extérieur de la rainure circonférentielle d'épaulement (24s) est une portion en relief d'épaulement (26s),
    la portion de renforcement (20) inclut une ceinture (34) incluant un grand nombre de câblés de ceinture (44, 44A, 44B, 44C, 44D) alignés les uns avec les autres, et une bande (36) incluant un câblé de bande enroulé de manière hélicoïdale (48, 48F, 48E),
    la bande (36) inclut une bande complète (40),
    chacune des deux extrémités (40e) de la bande complète (40) est située axialement à l'extérieur de la rainure circonférentielle d'épaulement (24s),
    la bande de roulement (4) a une surface de bande de roulement (22) qui vient en contact avec une surface routière,
    dans une section transversale méridienne, une ligne de contour (TL) de la surface de bande de roulement (22) inclut une première ligne de contour (TL1) incluant un équateur (PC), et une paire de secondes lignes de contour (TL2) connectées à la première ligne de contour (TL1) et chacune incluant une extrémité (PE) de la surface de bande de roulement (22),
    la première ligne de contour (T1) est un arc,
    chacune de la paire de secondes lignes de contour (L2) est une ligne droite ou un arc,
    quand chaque seconde ligne de contour (L2) est un arc, un rayon de courbure (R2) de la seconde ligne de contour (TL2) est différent d'un rayon de courbure (R1) de la première de contour (TL1), et
    dans la ligne de contour (TL) de la surface de bande de roulement (22), une frontière (PB) entre la première ligne de contour (TL1) et la seconde ligne de contour (TL2) est située dans une portion correspondant à la rainure circonférentielle d'épaulement (24s) ;
    **caractérisé en ce que**
    la bande (36) inclut une paire de bandes de bord (42), la paire de bandes de bord (42) étant disposés de façon à être espacés l'un de l'autre dans la direction axiale, et étant chacun situés radialement à l'extérieur de l'extrémité (40e) de la bande complète (40),
    un diamètre extérieur du pneumatique (2) au niveau de l'équateur (PC) est un premier diamètre extérieur D1,
    un diamètre extérieur du pneumatique (2) au niveau d'un bord intérieur (SS) de la portion en relief d'épaulement (26s) est un deuxième diamètre extérieur D2,
    un diamètre extérieur du pneumatique (2) au niveau de l'extrémité (PE) de la surface de bande de roulement (22) est un troisième diamètre extérieur D3, et le premier diamètre extérieur D1, le deuxième diamètre extérieur D2, et le troisième diamètre extérieur D3 satisfont aux formules (1) et (2) suivantes,

$$D1 > D2 > D3 \qquad\qquad (1),$$

$$0{,}65 \leq (D2 - D3) / (D1 - D3) \leq 0{,}85 \qquad (2).$$

2. Pneumatique pour service intensif (2) selon la revendication 1, dans lequel

    chaque seconde ligne de contour (TL2) est un arc, et

quand une unité du rayon de courbure (R2) de la seconde ligne de contour (TL2) est le millimètre, une courbure représentée par une réciproque du rayon de courbure (R2) n'est pas supérieure à 0,002 mm$^{-1}$.

**3.** Pneumatique pour service intensif (2) selon la revendication 1, dans lequel chaque seconde ligne de contour (TL2) est une ligne droite.

**4.** Pneumatique pour service intensif (2) selon l'une quelconque des revendications 1 à 3, dans lequel

dans une forme d'une surface de contact au sol obtenue quand le pneumatique (2) est monté sur une jante standardisée, qu'une pression interne du pneumatique (2) est ajustée à une pression interne standardisée, qu'une charge standardisée est appliquée sur le pneumatique (2), et que le pneumatique (2) est amené en contact avec une surface routière plate,
une longueur de la surface de contact au sol au niveau de l'extrémité (PE) de la surface de bande de roulement (22) est une longueur de contact au sol LS1, et une longueur de la surface de contact au sol à une position correspondant à une largeur qui est égale à 70 % d'une largeur de contact au sol maximum est une longueur de contact au sol LS2, et
un rapport (LS2/LS1) de la longueur de contact au sol LS2 sur la longueur de contact au sol LS1 n'est pas inférieur à 0,90 et n'est pas supérieur à 1,10.

**5.** Pneumatique pour service intensif (2) selon la revendication 4, dans lequel

dans la surface de contact au sol, une longueur de la surface de contact au sol au niveau d'un centre d'une largeur de contact au sol est une longueur de contact au sol LS3, et
un rapport (LS3/LS2) de la longueur de contact au sol LS3 sur la longueur de contact au sol LS2 n'est pas inférieur à 0,95 et n'est pas supérieur à 1,20.

**6.** Pneumatique pour service intensif (2) selon l'une quelconque des revendications 1 à 5, dans lequel un rapport (WF/WT) d'une largeur (WF) de la bande complète (40) sur une largeur (WT) de la surface de bande de roulement (22) n'est pas inférieur à 0,65 et n'est pas supérieur à 0,80.

**7.** Pneumatique pour service intensif (2) selon l'une quelconque des revendications 1 à 6, dans lequel une distance (EU) dans la direction axiale depuis l'extrémité (40e) de la bande complète (40) sur une extrémité intérieure (42ue) de la bande de bord (42) n'est pas inférieure à 8,0 mm, et une distance (ES) dans la direction axiale depuis l'extrémité (40e) de la bande complète (40) sur une extrémité extérieure (42se) de la bande de bord (42) n'est pas inférieure à 8,0 mm.

FIG. 1

FIG. 2

**FIG. 3**

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9105084 A
- US 9987883 B2
- JP 2007176438 A